# FASCICULE DE BREVET EUROPEEN

(11) **EP 2 692 800 B1**
(45) Date de publication et mention de la délivrance du brevet: **13.03.2019**
(21) Numéro de dépôt: 13306112.7
(22) Date de dépôt: 01.08.2013
(51) Int. Cl.: C08L 95/00, C08J 3/03

(54) **Procédé de préparation d'une émulsion fine de liant bitumineux**
Herstellungsverfahren einer feinen Emulsion eines bituminösen Bindemittels
Method for preparing a fine emulsion of bituminous binder

(30) Priorité: 02.08.2012 FR 1257533
(43) Date de publication de la demande: 05.02.2014
(73) Titulaire: COLAS, 75015 Paris (FR)
(72) Inventeur: Belkahia, Abdeltif, 75002 Paris (FR)
(74) Mandataire: Jacobacci Coralis Harle

(56) Documents cités:
- EP-A2- 0 283 247
- WO-A1-92/02586
- US-A- 3 650 113
- US-A1- 2006 130 704
- US-A1- 2008 310 252
- Anonymous: "IKA Process Technology", , 6 juillet 2011 (2011-07-06), pages 1-24, XP055062061, Staufen, Germany Extrait de l'Internet: URL:http://www.ikaprocess.com/pdf/Process- Technology.pdf [extrait le 2013-05-07]
- Anonymous: "Basic Asphalt Emulsion manual; MS-19; 4th Edition" In: "Basic Asphalt Emulsion manual; MS-19; 4th Edition", 1 February 2008 (2008-02-01), Asphalt Institute, Lexington, Kentucky;USA, XP055100940, ISBN: 978-1-93-415456-4 page i-iii,v-xi,1-3,5-12, * page 10 *

## Description

L'invention concerne un procédé de préparation d'émulsions fines de liant bitumineux utilisables dans toutes les applications des émulsions de bitume, notamment dans l'industrie routière ainsi que l'industrie du bâtiment.

Il existe différents moyens de rendre maniable le bitume. L'une de ces techniques consiste à le placer en émulsion. Une émulsion de bitume est constituée d'une phase bitumineuse et d'une phase aqueuse, l'une desdites phases étant dispersée sous forme de gouttelettes discontinues dans une phase continue de l'autre. Les émulsions de bitume employées dans l'industrie routière sont généralement directes, c'est-à-dire que la phase dispersée à gouttelettes discontinues est constituée par la phase bitumineuse.

De façon classique, les émulsions de liant bitumineux sont préparées par mélange dans un mélangeur approprié d'une phase bitumineuse et d'une phase aqueuse dispersante. Le diamètre médian des gouttelettes de liant bitumineux constituant la phase dispersée varie généralement de 3 à 13 µm, avec un écart type allant de 0,2 à 0,8.

La phase huileuse (liant bitumineux) dispersée peut être constituée soit de bitume pur, soit comprendre un mélange d'un bitume avec divers additifs tels que des fluxants (fluidifiants) ou des polymères tels que des élastomères.

La phase aqueuse dispersante comprend notamment de l'eau et généralement un ou plusieurs agents émulsifiants, notamment des tensioactifs.

Comme exemples de mélangeurs utilisés pour la préparation d'émulsions bitumineuses, on peut citer les moulins colloïdaux, qui peuvent être composés d'un rotor et d'un stator avec un entrefer réglable ou pas, et les mélangeurs statiques comprenant une pompe à haute pression. Ces appareils d'émulsification permettent de travailler en continu et apportent l'énergie mécanique nécessaire au cisaillement des phases en présence pendant le mélange, sous des taux de cisaillement variant généralement de 2000 à 100000 s⁻¹. Les appareils d'émulsification sont conçus pour fonctionner dans une configuration précise à des débits nominaux dont il est difficile de s'écarter. Les réglages possibles des appareils sont donc souvent limités.

La taille des gouttelettes de liant bitumineux d'une émulsion conditionne son comportement. Il est impératif que l'émulsion soit suffisamment fine pour être stable au stockage. Ainsi, des gouttelettes de taille moyenne supérieure à environ 20 µm conduisent à des émulsions qui ne sont pas stables au stockage : l'émulsion rompt pratiquement toujours dans les minutes ou heures qui suivent l'émulsification.

Il a été constaté que plus la taille des gouttelettes était faible, plus l'émulsion était stable au stockage.

La diminution de la taille des gouttelettes augmente par ailleurs la viscosité de l'émulsion.

Comme cela est bien connu, pour une population de gouttelettes de diamètres différents, le terme "granulométrie" (ou distribution granulométrique) désigne la distribution du nombre de gouttelettes en fonction du diamètre de ces gouttelettes. Une méthode de détermination courante de la granulométrie consiste à exploiter le spectre de diffraction obtenu par le passage d'un faisceau laser à travers l'émulsion. Ce spectre est ensuite retraité pour obtenir la façon dont les gouttelettes sont distribuées en fonction de leur diamètre, par exemple sous forme d'une courbe de distribution.

La granulométrie est alors définie par deux grandeurs. La première grandeur est le diamètre médian (D₅₀) qui représente, dans la présente demande, la valeur du diamètre pour laquelle la population des gouttelettes est répartie en deux ensembles identiques, en termes de volume.

La deuxième grandeur est l'étalement de la courbe de distribution sur l'axe des diamètres des gouttelettes. Cet étalement est quantifié par l'écart type de la distribution, de nature logarithmique. Il est défini dans la demande FR 2852964.

La demande WO 2008/009694 au nom d'Eurovia décrit la préparation d'émulsions de bitume non fluxé ayant un diamètre médian allant de 0,2 à 2 µm. Dans la partie expérimentale de cette demande, des émulsions bitumineuses primaires dont les gouttelettes de liant ont un diamètre médian allant de 0,5 à 0,8 µm et contenant de 0,8 à 1,2 % en masse de surfactant sont obtenues par deux techniques, soit en utilisant un moulin colloïdal (procédé continu), soit par inversion de phase en régime laminaire dans un réacteur chauffant équipé d'un système d'agitation à vitesse contrôlable. Dans un second temps, ces émulsions primaires sont utilisées en tant que phases aqueuses d'une émulsion secondaire de bitume, ayant un diamètre médian supérieur à 2 µm.

Le procédé décrit dans la demande WO 2008/009694 nécessite d'être amélioré, car il présente des contraintes dans le choix des matières premières. Il a en effet été constaté qu'une émulsion bitumineuse primaire particulière devait être utilisée pour parvenir à un diamètre médian des particules de liant de 2 µm ou moins. En outre, il vise la préparation d'émulsions qui ne sont pas fines.

La présente invention a pour objet de fournir un procédé de préparation d'une émulsion de bitume qui remédie aux inconvénients des émulsions de bitume de l'art antérieur, qui permet notamment de régler de manière mécanique le diamètre médian des gouttelettes d'une émulsion de bitume sans être contraint de choisir un type d'émulsifiant ou de bitume.

En particulier, la présente invention a pour objet de fournir une émulsion de bitume dont la distribution de taille des gouttelettes est très étroite, de préférence monodispersée, et dont, d'autre part, le diamètre médian des gouttelettes est inférieur ou égal à 3 µm, tout en assurant une stabilité au stockage de l'émulsion. Par émulsion monodispersée, on entend dans la présente demande une émulsion dont l'écart type de la distribution granulométrique des gouttelettes de liant, tel que défini dans la demande FR 2852964, est inférieur à 0,3.

Les buts ci-dessus sont atteints selon l'invention par un procédé de fabrication d'une émulsion de bitume pour la réalisation de couches et/ou de revêtements de construction routière et/ou de génie civil, comprenant les étapes suivantes :
i) préparer une émulsion de liant bitumineux primaire par mélange, sous l'effet d'une énergie mécanique de cisaillement, d'une phase aqueuse dispersante et d'un fiant bitumineux, en présence d'au moins un émulsifiant choisi parmi les tensioactifs cationiques, le taux de cisaillement étant supérieur ou égal à 2.10³ et inférieur à 10⁵ s⁻¹ ; et
ii) soumettre l'émulsion de liant bitumineux primaire résultant de l'étape précédente à une énergie mécanique de cisaillement, le taux de cisaillement allant de 10⁵ à 10⁶ s⁻¹, de préférence de 5.10⁵ à 10⁶ s⁻¹, de façon à obtenir des gouttelettes de liant bitumineux ayant un diamètre médian inférieur ou égal à 3 µm dispersées dans la phase aqueuse.

Le liant bitumineux de l'invention peut comprendre tout bitume, en particulier tout bitume classiquement utilisé dans les applications routières et industrielles, tels que les bitumes de distillation directe, quel que soit leur grade de pénétrabilité, les bitumes de synthèse, en particulier colorables, de désasphaltage ou oxydés. Le bitume employé peut éventuellement être modifié par adjonction d'additifs. En particulier, le liant bitumineux peut comprendre un ou plusieurs polymères ou copolymères, tels que les polyoléfines ou les polymères et copolymères élastomères comme les polymères et copolymères de styrène et de butadiène.

Le liant bitumineux peut éventuellement être fluxé (fluidifié), c'est-à-dire comprendre au moins un fluxant (fluidifiant), tel qu'un solvant d'origine pétrolière, pétrochimique ou carbochimique, ou de préférence par un fluxant d'origine naturelle à base de matières grasses animales et/ou végétales, renouvelables et non toxiques. Ces fluxants d'origine naturelle peuvent avantageusement être modifiés par oxydation afin d'augmenter leur siccativité, tel qu'exposé dans la demande FR 2876382, au nom du déposant.

La teneur en liant bitumineux de l'émulsion selon l'invention varie généralement de 10 à 80 %, de préférence de 40 à 80 %, mieux de 40 à 70 % en poids par rapport au poids total de l'émulsion.

La teneur en bitume varie généralement de 25 à 100 %, de préférence de 50 à 100 %, mieux de 65 à 90 % en poids par rapport au poids total de phase bitumineuse (liant bitumineux).

La teneur en fluxant varie généralement de 0 à 75 %, de préférence de 0 à 50 %, mieux de 10 à 35 % en poids par rapport au poids total du liant bitumineux.

La viscosité du liant bitumineux de l'invention est de préférence inférieure ou égale à 1000 mPa.s, mieux varie de 250 à 700 mPa.s, idéalement de 300 à 400 mPa.s, afin qu'il ne soit pas trop délicat de parvenir à une émulsion fine au cours de l'étape ii).

L'agent émulsifiant qui contribue à la stabilité de l'émulsion et au réglage de la taille moyenne des gouttelettes et leur distribution étroite est un tensioactif, de préférence un tensioactif de nature organique. Le ou les tensioactifs employés peuvent être cationiques, non ioniques, amphotères ou anioniques. Ces tensioactifs sont bien connus dans la technique, et sont disponibles commercialement. A titre d'exemple, on citera, de la société Chemoran (i) les tensioactifs cationiques MN, TNB, GAP, TDC, MDC, TCMC, CHQ (ii) les tensioactifs amphotères CHT et AFM. L'émulsion de liant bitumineux primaire selon l'invention contient nécessairement au moins un émulsifiant choisi parmi les tensioactifs cationiques.

La quantité d'émulsifiant (tensioactif cationique) dans l'émulsion de bitume selon l'invention varie de préférence de 0,05 à 2 % en poids par rapport au poids total de l'émulsion, de préférence de 0,1 à 1 % en poids. L'utilisation d'une quantité plus faible d'émulsifiant est rendue possible par la seconde étape du procédé de l'invention, qui fournit des émulsions fines, stabilisées. Elle permet un gain économique non négligeable et minimise les rejets dangereux pour l'environnement, les émulsifiants étant généralement des composés toxiques.

L'agent émulsifiant peut être ajouté à la phase aqueuse dispersante, à la phase bitumineuse ou en partie à chacune de ces deux phases. Il est généralement contenu, de préférence en totalité, dans la phase aqueuse dispersante mélangée avec le liant bitumineux au cours de la première étape du procédé de l'invention. En variante, il est également possible d'ajouter le tensioactif ou un tensioactif additionnel à la phase dispersée.

On notera aussi que, selon l'invention, l'émulsifiant peut être directement inclus dans la structure même du liant bitumineux. C'est notamment le cas des bitumes acides de type acide naphténique qui comportent dans leur structure des fonctions à activité émulsifiante. Dans ce cas, la présence d'un émulsifiant additionnel, dans l'une des deux phases, n'est pas nécessaire lors de la préparation de l'émulsion primaire. L'addition d'une base organique ou minérale à la phase aqueuse initiale est alors suffisante.

L'émulsion bitumineuse selon l'invention peut contenir les additifs usuels utilisés dans la technique et notamment des stabilisants, agents anti-gel, agents épaississants, latex naturels ou synthétiques (par exemple un latex de styrène-butadiène-styrène SBS, polychloroprène ou caoutchouc-butadiène-styrène SBR), lesquels sont préférablement ajoutés à la phase aqueuse dispersante.

La première étape du procédé de l'invention est réalisée en dispersant le liant bitumineux dans la phase aqueuse à l'aide de tout appareillage classique approprié, tel qu'un moulin colloïdal, une turbine ou un mélangeur statique, bien connus dans la technique, sous cisaillement à un taux supérieur ou égal à 2.10³ et inférieur à 10⁵ s⁻¹.

Cette première étape ne diffère en rien du point de vue des températures et pressions des procédés conventionnels, qui doivent permettre de maintenir le liant bitumineux à l'état liquide. L'homme du métier s'appliquera notamment à éviter que l'émulsion primaire n'entre en ébullition en sortie du mélangeur.

A cette fin, il convient d'ajuster les températures respectives de la phase aqueuse et de la phase bitumineuse devant être introduites dans le mélangeur et, au besoin, de réaliser le mélange sous pression (de préférence sous 2 à 3 bar), ce qui permettra de travailler à une température supérieure à 100°C. Ainsi, la température de la phase bitumineuse varie préférentiellement de 100 à 180°C. Comme cela est bien connu dans la technique, la température du liant bitumineux est de préférence choisie de façon à ce qu'il présente une viscosité voisine de 200 mPa.s.

A titre d'indication, une température comprise entre la température ambiante et 70°C est généralement appropriée pour la phase aqueuse initiale.

L'étape i) du procédé de l'invention permet de former une émulsion bitumineuse dont les gouttelettes de liant bitumineux dispersées dans la phase aqueuse ont un diamètre médian généralement supérieur à 2 µm, mieux 3 µm. Le diamètre de ces gouttelettes est généralement inférieur ou égal à 15 µm, de préférence inférieur ou égal à 10 µm.

La deuxième étape du procédé de l'invention consiste à soumettre l'émulsion de liant bitumineux primaire résultant de l'étape précédente à une énergie mécanique de cisaillement, le taux de cisaillement pouvant varier de 10⁵ à 10⁶ s⁻¹, de façon à obtenir des gouttelettes de liant bitumineux ayant un diamètre médian inférieur ou égal à 3 µm dispersées dans la phase aqueuse. Cette énergie de cisaillement peut notamment être obtenue en soumettant l'émulsion primaire à des pressions allant de 100 à 2000 bar.

Il n'est pas possible de combiner les étapes i) et ii) en une seule étape, c'est-à-dire réaliser directement la préparation de l'émulsion bitumineuse sous un fort taux de cisaillement, la raison étant que le matériel actuel ne le permet pas. Les appareils (broyeurs et microniseurs) actuellement disponibles permettant de réaliser l'étape ii) ne sont conçus que pour travailler sur des émulsions déjà formées, étant donné qu'ils ne disposent pas de circuits séparés pour faire arriver le bitume et la phase aqueuse séparément dans la zone à fort cisaillement. En outre, appliquer un taux de cisaillement trop élevé au moment de l'émulsification pourrait conduire à des blocages de matériel.

Au cours de cette seconde étape, l'émulsion primaire est "broyée" du fait du fort taux de cisaillement, ce qui a pour effet de réduire fortement la taille des gouttelettes de liant bitumineux.

De préférence, on obtient à l'issue de l'étape ii) des gouttelettes de liant bitumineux ayant un diamètre médian inférieur ou égal à 2 µm, préférentiellement allant de 0,4 à 2 µm, mieux de 0,5 à 2 µm et encore mieux de 0,5 à 1,8 µm.

Les appareils permettant d'appliquer des taux de cisaillement aussi élevés que ceux nécessités par l'étape ii) sont bien connus dans le domaine de la cosmétique, de la pharmacologie, de l'alimentaire. On peut citer, sans limitation, les homogénéisateurs haute pression, commercialisés par exemple par l'entreprise GEA (permettant de travailler jusqu'à une pression de 1500 bar), ou un disperseur haute pression, par exemple le LABOR pilot commercialisé par l'entreprise IKA. Cependant, de tels appareils ne sont pas employés pour "microniser" des émulsions de liant bitumineux.

Les homogénéisateurs haute pression fonctionnent en mettant sous haute pression l'émulsion à l'aide d'une pompe à piston spécifique. L'émulsion est poussée à travers une valve dont l'ouverture est réglable. Cette action mécanique a pour effet de réduire la taille des gouttelettes de liant bitumineux ainsi que l'écart type de la distribution granulométrique.

Les disperseurs (broyeurs) haute pression sont composés d'un rotor et d'un stator. Le cisaillement qu'ils imposent à l'émulsion de bitume permet lui aussi de réduire la taille des gouttelettes de liant.

L'étape ii) du procédé de l'invention est de préférence réalisée sous une pression allant de 100 à 2000 bar, de préférence de 100 à 1500 bar, mieux de 500 à 1000 bar. Il a été constaté que les émulsions de bitume résistaient à ce type de traitement, dans le sens où elles ne sont pas déstabilisées et ne rompent pas lorsqu'elles sont soumises à ces efforts de cisaillement.

Cette deuxième étape du procédé de fabrication de l'émulsion bitumineuse fine peut comporter un seul ou plusieurs passages dans l'appareil avant l'obtention de la granulométrie idéale, selon les performances de l'appareil utilisé et selon la viscosité du liant bitumineux. Le nombre de passages va généralement de 1 à 30, de préférence de 5 à 20. Le temps de passage et le nombre de passages dans l'appareil haute pression pourront facilement être choisis par l'homme du métier de façon à parvenir à une émulsion finale dont les gouttelettes de liant bitumineux ont un diamètre médian inférieur ou égal à 3 µm. L'un des intérêts de l'invention réside dans le fait que l'on peut régler la taille finale des gouttelettes obtenues en modifiant le nombre de passages dans l'appareil haute pression utilisé sans s'imposer un type de bitume ou un type d'émulsifiant particulier.

Etant donné que les appareils utilisés pour produire le cisaillement dans l'étape ii) du procédé fonctionnent sous de hautes pressions, il est généralement possible de chauffer l'émulsion de bitume à une température allant de 100°C à 120°C. Il est impératif dans ce cas de réceptionner l'émulsion finale dans une cuve sous pression ou de refroidir l'émulsion en ligne avant retour à la pression atmosphérique.

Il est à noter que l'étape ii) du procédé de fabrication a généralement pour effet d'augmenter la température de l'émulsion. L'installation peut avantageusement comporter des échangeurs thermiques afin que les flux entrant et sortant s'échangent des calories.

Selon un mode de réalisation, l'étape ii) est mise en oeuvre immédiatement après la fin de l'étape i).

Selon un autre mode de réalisation, la première étape et la seconde étape du procédé de l'invention sont décalées dans le temps. Ainsi, il est possible de stocker l'émulsion primaire avant de réaliser l'étape ii) du procédé. Il est essentiel pour ce stockage d'éviter des températures trop basses qui pourraient entraîner le gel de l'émulsion (et donc sa rupture). Ainsi, une température de stockage appropriée est comprise entre 70 et 95°C, ou plus élevée, à condition d'adapter la pression de stockage pour éviter l'ébullition.

L'émulsion peut être "broyée" à la demande en fonction de son domaine d'utilisation. Le système de broyage peut également s'intercaler dans la ligne de fabrication de l'émulsion. Ce dernier système peut imposer une pompe de gavage intermédiaire.

L'émulsion préparée selon le procédé de l'invention peut être stockée avant utilisation. Elle sera de préférence maintenue à une température allant de 20 à 70°C. De façon avantageuse, l'émulsion est conservée à une température de 40 à 50°C par calorifugeage des récipients de stockage.

Les émulsions de l'invention sont utilisables dans des applications industrielles variées telles que la réalisation de couches et/ou revêtements de construction routière et/ou de génie civil, par exemple la construction et l'entretien de chaussées et l'industrie du bâtiment. Elles peuvent notamment être utilisées pour la préparation d'enduits superficiels (technique consistant à répandre sur la chaussée à revêtir un lit de granulat calibré, puis un film d'émulsion), de couches d'accrochage ou de couches de cure, d'enrobés, de graves-émulsion, de coulis bitumineux, d'enrobés coulés à froid, ou encore en vue d'assurer l'étanchéité de fondations.

Le procédé selon l'invention possède de nombreux avantages.

Il permet tout d'abord de préparer une émulsion stabilisée, ce qui engendre des économies d'émulsifiant et de fluxant. La stabilité d'une émulsion est en effet étroitement liée à la taille des gouttelettes qui composent la phase dispersée, la vitesse de sédimentation étant proportionnelle au carré du rayon des gouttelettes. Plus les gouttelettes sont fines, plus la décantation est ralentie.

Les émulsions de l'invention sont stables pendant au moins 24 heures, et généralement plusieurs mois, de préférence au moins 6 mois.

Le fait que les émulsions selon l'invention soient plus stables permet aussi de travailler à des teneurs élevées en bitume. La teneur en bitume peut ainsi varier de 10 à 80 %, de préférence de 40 à 80 %, mieux de 40 à 70 % en poids par rapport au poids total de l'émulsion selon l'invention.

La concentration des émulsions de bitume préparées avec des outils traditionnels est souvent bridée à 70 % en poids de bitume. Certains types d'émulsion ayant une formulation adaptée permettent d'atteindre 70 à 72% en poids. Au-delà de ces valeurs, la viscosité d'une émulsion classique peut augmenter de manière exponentielle conduisant à une instabilité. Le procédé selon l'invention permet d'envisager la formulation d'émulsions fortement concentrées et visqueuses tout en restant stable. Un couplage d'une émulsion selon l'invention avec une émulsion classique ayant une taille de gouttelettes plus élevée est envisageable. La finalité de ce type d'émulsion peut se trouver en technique d'enrobage et de répandage.

Le procédé selon l'invention permet aussi de conférer à l'émulsion un nouveau comportement d'enrobage. Le comportement des sables et des gravillons face à une émulsion est différent et nécessite souvent des formulations adaptées et un séquençage de l'enrobage. Un sable « lavé » de ses fines (éléments inférieurs à 63 µm) aura un comportement proche de celui des gravillons. Cette différence de comportement est essentiellement due à la surface spécifique développée par les éléments fins mais aussi à la taille relative des gouttelettes de l'émulsion (3 à 13 µm dans les procédés traditionnels) par rapport à celle des fines (15 à 20 µm généralement mesuré). Réduire la taille des particules d'émulsion grâce au procédé de l'invention permet de conférer aux sables un comportement de « gravillon » peu consommateur en émulsifiant et facile à enrober. Plusieurs effets sont attendus : amélioration de la qualité d'enrobage et de la maniabilité de l'enrobé sans surdosage en émulsifiant qui pénalise la montée en cohésion après compactage. En technique d'enrobage, la présence de fluxant dans le liant de l'émulsion complique souvent l'enrobage car il favorise le désenrobage des gravillons. Grâce au procédé de l'invention, il est envisageable pour parer à ce phénomène de combiner émulsion classique de bitume pur ou légèrement fluxé favorable aux gravillons et émulsion de bitume davantage fluxé selon l'invention ayant une taille de gouttelettes réduite, le bitume fluxé étant favorable à la fraction sableuse. Les émulsions peuvent être mélangées avant incorporation aux granulats ou bien l'enrobage peut être séquencé. Le séquençage consiste à enrober séparément le sable et les gravillons, et cela en utilisant des émulsions de formulation différentes et adaptées ; ou bien encore en ne séquencant que l'arrivée des deux émulsions dans le malaxeur.

Le procédé selon l'invention permet également d'obtenir des émulsions d'imprégnation ou de pénétration plus efficaces, comme le montre la partie expérimentale. Les émulsions d'imprégnation ou de pénétration, qui sont mises en contact avec des mélanges granulaires, imprègnent ou pénètrent leur support grâce à la gravité mais aussi aux forces capillaires. La taille relative des gouttelettes par rapport à celle des porosités ou des capillarités rencontrées aura ainsi une influence sur la diffusion de l'émulsion dans le matériau à imprégner (ou enrober). Les particules solides contenues dans l'émulsion bitumineuse peuvent être « bloquées » par les capillarités si l'émulsion est grossière. Dans ce mode de réalisation, il est préférable que le bitume soit fluxé avant d'être émulsionné pour que les particules puissent se déformer lorsqu'elles sont absorbées par le support. Le procédé de fabrication d'émulsions selon l'invention permet de réduire directement la taille des gouttelettes de l'émulsion et donc l'élaboration d'émulsions pour imprégnation ou pénétration plus performantes (meilleur pouvoir pénétrant), ou de réduire la quantité de fluxant en maintenant le même pouvoir pénétrant. L'étape ii) du procédé de l'invention est d'autant plus simple industriellement que le liant de l'émulsion est fluide. Il est donc envisageable dans cette technique de concevoir une émulsion mixte constituée du mélange d'une émulsion de liant bitumineux selon l'invention fortement fluxé et d'une émulsion classique de liant faiblement fluxé.

Le procédé selon l'invention permet également d'obtenir des émulsions de retraitement en place ou en poste régénérantes plus performantes. Les émulsions de retraitement en place ou en poste d'enrobage d'agrégats d'enrobé ont pour finalité de mobiliser le liant dur et vieilli de l'ancienne chaussée. Utiliser une émulsion obtenue par le procédé selon l'invention pour tout ou partie du liant régénérant permet d'augmenter la surface spécifique afin d'obtenir un mélange intime avec l'ancien liant. Comme expliqué plus haut, l'étape ii) du procédé de l'invention appliquée à un bitume fluidifié, en couplage ou pas avec une émulsion de bitume pur ou faiblement modifié est également envisageable. Le but est de trouver un compromis entre cohésion au jeune âge et pouvoir régénérant.

Le procédé selon l'invention fournit des émulsions bitumineuses plus fines que les émulsions fabriquées avec l'outil traditionnel et monodispersées, présentant une distribution de la taille des gouttelettes de la phase dispersée plus resserrée. Ces émulsions sont donc également plus visqueuses qu'une émulsion grossière et polydispersée. Le procédé de l'invention est donc avantageux dans le sens où il permet d'augmenter la viscosité d'une émulsion même dans le cas de l'utilisation d'une faible concentration en liant bitumineux. Par ailleurs, des émulsions visqueuses sont particulièrement souhaitables pour certaines applications telles que la réalisation d'enduits superficiels devant être appliqués sur des routes à forte pente ou fort devers.

Contrairement à certains procédés de l'art antérieur, notamment celui décrit dans la demande WO 2008/009694, le procédé de l'invention ne nécessite pas d'utiliser une composition d'émulsion particulière pour parvenir à une émulsion finale fine, la granulométrie étant affinée mécaniquement.

L'exemple suivant illustre la présente invention sans la limiter.

### Exemple

On prépare 1000 kg d'une émulsion d'imprégnation contenant 550 kg de liant bitumineux et 450 kg de phase aqueuse dispersante.

Le liant bitumineux employé est composé de 74 % en masse de bitume pur 80/100 et de 26 % en masse de fluxant Végéflux®. Le Végéflux® est un fluxant d'origine végétale modifié chimiquement par oxydation mis au point par le groupe COLAS. La phase aqueuse employée contient 3,5 kg du tensioactif MN de nature imidazoline/amidoamine produit par CHEMORAN (groupe COLAS), 2 kg d'acide chlorhydrique (32%) et 444,5 kg d'eau. L'acide chlorhydrique est utilisé pour salifier le tensioactif.

L'étape i) du procédé de l'invention est réalisée par mélange du liant bitumineux et de la phase aqueuse dispersante dans un pilote de laboratoire équipé d'un rotor stator (température du liant : 120°C, température de la phase aqueuse : 40°C, taux de cisaillement 55000 s⁻¹).

Elle fournit une émulsion dont la taille des gouttelettes de liant bitumineux est de 7,8 µm (exemple comparatif 1).

L'étape ii) du procédé de l'invention est réalisée par passages successifs de l'émulsion produite dans l'étape i) dans un homogénéisateur haute pression de la société GEA (TWIN PANDA 600), à une température maintenue à 80°C et à une pression de 600 bar (exemple 1), ou par passages successifs de l'émulsion produite dans l'étape i) dans un disperseur haute pression de type rotor stator (LABOR PILOT, exemple 2).

La granulométrie des émulsions formées a été mesurée grâce à un granulomètre laser (appareillage de marque MALVERNE).

La principale fonction des émulsions préparées ci-dessus est d'imprégner les supports non liés poreux afin de pérenniser l'interface entre ceux-ci et les couches supérieures de la chaussée. En dehors de la nature chimique de tous les composants de l'émulsion, deux paramètres essentiels influencent l'efficacité d'une émulsion d'imprégnation : la viscosité du liant émulsionné (modulable notamment par la quantité de fluxant incorporée au bitume avant l'émulsification) et la taille relative des gouttelettes de liant par rapport à celle des capillarités du support à imprégner.

La qualité de l'imprégnation est jugée en mesurant le pouvoir d'imprégnation de l'émulsion au travers de l'essai normalisé européen EN 12849 qui mesure le temps de percolation d'un mélange de fines et de sable siliceux.

Le tableau 1 montre qu'il est possible de réduire la taille des particules de liant bitumineux en dessous de 2 µm grâce à un nombre adéquat de passages de l'émulsion dans l'appareil, le mélange pouvant être recyclé en circuit fermé.

**Tableau 1**

| Exemple | Comparatif 1 | Comparatif 2 | 1 | Comparatif 3 | 2 |
|---|---|---|---|---|---|
| Nombre de passages dans l'homogénéisateur haute pression (H) ou le disperseur haute pression (D) | 0 | 1 (H) | 10 (H) | 1 (D) | 18 (D) |
| Diamètre médian des gouttelettes de liant bitumineux (µm) | 7,8 | 4,7 | 1,4 | 5,7 | 1,7 |
| Ecart type | 0,23 | 0,25 | 0,16 | 0,25 | 0,13 |
| Temps de percolation selon EN 12849 (min) | > 20 | 7 | 3 | 9 | 3 |

Le tableau ci-dessus illustre l'évolution de la taille des gouttelettes de liant bitumineux en fonction du nombre de cycles de "broyage" (passages) qu'elles subissent dans un homogénéisateur ou disperseur haute pression.

En l'absence d'étape ii) selon l'invention, le temps de percolation est supérieur à 20 minutes, ce qui est le temps maximum au-delà duquel la mesure n'est plus pertinente. Après 10-18 passages dans l'homogénéisateur ou le disperseur haute pression, le temps de percolation est abaissé à 3 minutes.

Les émulsions des exemples 1 et 2 sont capables de résister à des pressions de 600 bar et sont avantageusement plus fines que les émulsions des exemples comparatifs 1 à 3. On a pu constater que la profondeur d'imprégnation des émulsions des exemples 1 et 2 était suffisamment améliorée pour envisager une économie conséquente de fluxant dans le liant bitumineux.

En outre, les émulsions des exemples 1 et 2 se sont avérées stables, dans le sens où il a été constaté qu'elles avaient conservé la même granulométrie pendant au moins 6 mois.

## Revendications

1. Procédé de fabrication d'une émulsion de bitume pour la réalisation de couches et/ou de revêtements de construction routière et/ou de génie civil, comprenant les étapes suivantes :
i) préparer une émulsion de liant bitumineux primaire par mélange, sous l'effet d'une énergie mécanique de cisaillement, d'une phase aqueuse dispersante et d'un liant bitumineux, en présence d'au moins un émulsifiant choisi parmi les tensioactifs cationiques, le taux de cisaillement étant supérieur ou égal à 2.10³ et inférieur à 10⁵ s⁻¹ ; et
ii) soumettre l'émulsion de liant bitumineux primaire résultant de l'étape précédente à une énergie mécanique de cisaillement, le taux de cisaillement allant de 10⁵ à 10⁶ s⁻¹, de façon à obtenir des gouttelettes de liant bitumineux ayant un diamètre médian inférieur ou égal à 3 µm dispersées dans la phase aqueuse.

2. Procédé selon la revendication 1, **caractérisé en ce que** l'étape ii) est réalisée sous une pression allant de 100 à 1500 bar, de préférence de 500 à 1000 bar.

3. Procédé selon l'une quelconque des revendications précédentes, **caractérisé en ce que** le liant bitumeux représente de 10 à 80 % en masse de la masse totale de l'émulsion, de préférence de 40 à 80 % en masse.

4. Procédé selon l'une quelconque des revendications précédentes, **caractérisé en ce que** le liant bitumeux comprend au moins un fluxant représentant jusqu' à 75 % de la masse du liant bitumeux.

5. Procédé selon l'une quelconque des revendications précédentes, **caractérisé en ce que** le liant bitumineux contient un bitume représentant 25 à 100 %, de préférence 65 à 90 % de la masse du liant bitumineux.

6. Procédé selon l'une quelconque des revendications précédentes, **caractérisé en ce que** l'émulsifiant représente de 0,05 à 2 % en masse par rapport à la masse totale de l'émulsion.

7. Procédé selon l'une quelconque des revendications précédentes, **caractérisé en ce qu'**à l'issue de l'étape ii), les gouttelettes de liant bitumineux ont un diamètre médian inférieur ou égal à 2 µm.

8. Procédé selon l'une quelconque des revendications précédentes, **caractérisé en ce que** l'étape ii) est réalisée dans un homogénéisateur haute pression ou un disperseur haute pression.

9. Procédé selon la revendication 8, **caractérisé en ce que** l'étape ii) comprend, afin d'obtenir des gouttelettes de liant bitumineux ayant un diamètre médian inférieur ou égal à 3 µm dispersées dans la phase aqueuse, de 1 à 30 passages de l'émulsion de liant bitumineux dans l'homogénéisateur haute pression ou le disperseur haute pression.

## Patentansprüche

1. Herstellungsverfahren einer Bitumenemulsion zum Erstellen von Schichten und/oder Belägen für den Straßenbau und/oder Tiefbau, umfassend die folgenden Schritte:
i) Herstellen einer primären bituminösen Bindemittelemulsion durch Mischen einer wässrigen Dispergierphase und eines bituminösen Bindemittels unter der Einwirkung einer mechanischen Scherenergie in Anwesenheit von mindestens einem Emulgator, ausgewählt aus den kationischen Tensiden, wobei die Schergeschwindigkeit größer oder gleich 2,10³ und kleiner als 10⁵ s⁻¹ ist, und
ii) Unterwerfen der primären bituminösen Bindemittelemulsion, die aus dem vorhergehenden Schritt hervorgeht, einer mechanischen Scherenergie, wobei die Schergeschwindigkeit von 10⁵ bis 10⁶ s⁻¹ geht, derart, um Tröpfchen des bituminösen Bindemittels zu erhalten, die einen mittleren Durchmesser von weniger als oder gleich 3 µm aufweisen, die in der wässrigen Phase dispergiert sind.

2. Verfahren nach Anspruch 1, **dadurch gekennzeichnet, dass** der Schritt ii) unter einem Druck von 100 bis 1.500 bar, vorzugsweise von 500 bis 1.000 bar, durchgeführt wird.

3. Verfahren nach einem der vorhergehenden Ansprüche, **dadurch gekennzeichnet, dass** das bituminöse Bindemittel von 10 bis 80 Ma.-% der Gesamtmasse der Emulsion, vorzugsweise von 40 bis 80 Ma.-% ausmacht.

4. Verfahren nach einem der vorhergehenden Ansprüche, **dadurch gekennzeichnet, dass** das bituminöse Bindemittel mindestens ein Verdünnungsmittel umfasst, das bis zu 75 % der Masse des bituminösen Bindemittels ausmacht.

5. Verfahren nach einem der vorhergehenden Ansprüche, **dadurch gekennzeichnet, dass** das bituminöse Bindemittel ein Bitumen enthält, das von 25 bis 100 %, vorzugsweise von 65 bis 90 % der Masse des bituminösen Bindemittels ausmacht.

6. Verfahren nach einem der vorhergehenden Ansprüche, **dadurch gekennzeichnet, dass** das Verdünnungsmittel von 0,05 bis 2 Ma.-% bezogen auf das Gesamtgewicht der Emulsion ausmacht.

7. Verfahren nach einem der vorhergehenden Ansprüche, **dadurch gekennzeichnet, dass** die Tröpfchen des bituminösen Bindemittels nach Abschluss des Schrittes ii) einen mittleren Durchmesser von weniger als oder gleich 2 µm aufweisen.

8. Verfahren nach einem der vorhergehenden Ansprüche, **dadurch gekennzeichnet, dass** der Schritt ii) in einem Hochdruckhomogenisator oder einem Hochdruckdispergierer durchgeführt wird.

9. Verfahren nach Anspruch 8, **dadurch gekennzeichnet, dass** der Schritt ii), um Tröpfchen des bituminösen Bindemittels zu erhalten, die einen mittleren Durchmesser von weniger als oder gleich 3 µm aufweisen, die in der wässrigen Phase dispergiert sind, 1 bis 30 Durchgänge der Emulsion des bituminösen Bindemittels in dem Hochdruckhomogenisator oder dem Hochdruckdispergierer aufweist.

## Claims

1. Method for producing a bituminous emulsion for making layers and/or coatings for road construction and/or civil engineering, comprising the following steps:
i) preparing a primary bitumen binder emulsion by mixing, under the effect of a mechanical shearing energy, a dispersing aqueous phase and a bituminous binder, in the presence of at least one emulsifier selected from cationic surfactants, the shearing rate being greater than or equal to 2.10³ and less than 10⁵ s⁻¹; and
ii) subjecting the primary bituminous binder emulsion resulting from the preceding step to a mechanical shearing energy, the shearing rate ranging from 10⁵ to 10⁶ s⁻¹, so as to obtain droplets of bituminous binder having a median diameter of less than or equal to 3 µm dispersed in the aqueous phase.

2. Method according to claim 1, **characterised in that** step ii) is carried out under a pressure ranging from 100 to 1500 bars, preferably from 500 to 1000 bars.

3. Method according to any one of the preceding claims, **characterised in that** the bituminous binder represents 10 to 80% by weight of the total weight of the emulsion, preferably 40 to 80% by weight.

4. Method according to any one of the preceding claims, **characterised in that** the bituminous binder comprises at least one fluxing agent representing up to 75% of the weight of the bituminous binder.

5. Method according to any one of the preceding claims, **characterised in that** the bituminous binder contains a bitumen representing 25 to 100%, preferably 65 to 90% of the weight of the bituminous binder.

6. Method according to any one of the preceding claims, **characterised in that** the emulsifier represents 0.05 to 2% by weight with respect to the total weight of the emulsion.

7. Method according to any one of the preceding claims, **characterised in that** at the end of step ii), the droplets of bituminous binder have a median diameter of less than or equal to 2 µm.

8. Method according to any one of the preceding claims, **characterised in that** step ii) is carried out in a high-pressure homogeniser or a high-pressure disperser.

9. Method according to claim 8, **characterised in that** step ii) comprises, in order to obtain droplets of bituminous binder having a median diameter of less than or equal to 3µm dispersed in the aqueous phase, 1 to 30 passages of the bituminous binder emulsion in the high-pressure homogeniser or the high-pressure disperser.
